# EUROPEAN PATENT APPLICATION

(11) **EP 4 794 330 A2**
(43) Date of publication of application: **19.08.2026**
(21) Application number: 26185909.4
(22) Date of filing: 17.06.2026
(51) Int. Cl.: H04N 19/117, H04N 19/176, H04N 19/182, H04N 19/82, H04N 19/86

(54) **ADAPTIVE COMPENSATION METHOD DURING VIDEO IMAGE ENCODING AND RELATED APPARATUS**

(30) Priority: 18.09.2025 CN 202511342064
(71) Applicant: Beijing Baidu Netcom Science Technology Co., Ltd., Beijing 100085 (CN)
(72) Inventor: LIU, Feiyang, Beijing, 100085 (CN)
(74) Representative: V.O.

(57) **Abstract**

The present disclosure provides an adaptive compensation method during video image encoding and a related apparatus, relating to the technical fields of cloud computing and video transcoding. The solution includes: acquiring an original pixel value array of an original pixel block to be encoded; acquiring a reconstructed pixel value array of a reconstructed pixel block obtained by reconstructing the original pixel block; determining an encoding category to which each pixel in the reconstructed pixel block belongs, and determining a respective target pixel value of each pixel simultaneously satisfying at least two optimization objectives; for each pixel under each encoding category, determining a first offset value according to an original pixel value of the pixel in the original pixel value array and a reconstructed pixel value of the pixel in the reconstructed pixel value array; determining a second offset value according to the target pixel value of the pixel and the reconstructed pixel value; determining an offset value interval of the pixel according to magnitudes of the first offset value and the second offset value; performing frequency statistics on integer offset values respectively included in the offset value intervals of all pixels under each encoding category, and determining an expected offset value of the corresponding encoding category based on a statistical result obtained; and compensating a corresponding reconstructed pixel value for each pixel according to the expected offset value corresponding to the encoding category to which the pixel belongs.

## Description

### TECHNICAL FIELD

The present disclosure relates to the technical field of data processing, in particular to the technical fields of cloud computing and video transcoding, and more particularly to an adaptive compensation method during video image encoding, an apparatus, an electronic device, a computer-readable storage medium and a computer program product.

### BACKGROUND

Starting from the digitization of visual information, how to efficiently compress it for storage and distribution has been a key technical problem. In order to enable the compressed bitstream to be interoperable and decoded in a standardized manner, international organizations have established international standards for video encoding, gradually forming a hybrid encoding framework based on technologies such as prediction, transform, quantization, entropy encoding, and post-processing filtering. In traditional image and video encoding frameworks, sample adaptive offset technology is used for post-processing filtering on the basis of reconstructed images, by superimposing a certain offset on the reconstructed values to reduce the distortion between the encoded reconstructed image and the original image.

### SUMMARY

Embodiments of the present disclosure provide an adaptive compensation method during video image encoding, an apparatus, an electronic device, a computer-readable storage medium and a computer program product.

In a first aspect, an embodiment of the present disclosure provides an adaptive compensation method during video image encoding, including: obtaining an original pixel value array of an original pixel block to be encoded in loop filtering processing; obtaining a reconstructed pixel value array of a reconstructed pixel block obtained by reconstructing the original pixel block; determining an encoding category to which each pixel in the reconstructed pixel block belongs, and determining a respective target pixel value of each pixel simultaneously satisfying at least two optimization objectives; for each pixel under each encoding category, determining a first offset value according to an original pixel value of the pixel in the original pixel value array and a reconstructed pixel value of the pixel in the reconstructed pixel value array; determining a second offset value according to the target pixel value of the pixel and the reconstructed pixel value; determining an offset value interval of the pixel according to magnitudes of the first offset value and the second offset value; performing frequency statistics on integer offset values respectively included in the offset value intervals of all pixels under each encoding category, and determining an expected offset value of the corresponding encoding category based on a statistical result obtained; and compensating a corresponding reconstructed pixel value for each pixel according to the expected offset value corresponding to the encoding category to which the pixel belongs.

In a second aspect, an embodiment of the present disclosure provides an electronic device, including: at least one processor; and a memory communicatively connected to the at least one processor; where the memory stores instructions executable by the at least one processor, and the instructions, when executed by the at least one processor, cause the at least one processor to implement the adaptive compensation method during video image encoding described in the first aspect.

In a third aspect, an embodiment of the present disclosure provides a non-transitory computer-readable storage medium storing computer instructions, where the computer instructions are configured to cause a computer to implement the adaptive compensation method during video image encoding described in the first aspect.

In a fourth aspect, an embodiment of the present disclosure provides a computer program product including a computer program, where the computer program, when executed by a processor, implements the steps of the adaptive compensation method during video image encoding described in the first aspect.

In the adaptive compensation solution during video image encoding provided by the present embodiment, for an original pixel block to be encoded in loop filtering processing, an original pixel value array of the original pixel block and a reconstructed pixel value array of a reconstructed pixel block obtained by reconstructing the original pixel block are first obtained; then, an encoding category to which each pixel in the reconstructed pixel block belongs is determined, and a respective target pixel value of each pixel simultaneously satisfying at least two optimization objectives is determined; next, for each pixel under each encoding category, a first offset value is determined according to an original pixel value of the pixel in the original pixel value array and a reconstructed pixel value of the pixel in the reconstructed pixel value array, a second offset value is determined according to the target pixel value of the pixel and the reconstructed pixel value, and an offset value interval of the pixel is determined according to magnitudes of the first offset value and the second offset value; subsequently, frequency statistics are performed on integer offset values respectively included in the offset value intervals of all pixels under each encoding category, and an expected offset value of the corresponding encoding category is determined based on a statistical result obtained; and adaptive compensation is performed on the corresponding reconstructed pixel value for each pixel according to the expected offset value corresponding to the encoding category to which the pixel belongs. In this way, an offset value that takes into account multiple optimization objectives may be used to compensate the pixel value, thereby achieving better coding performance.

It should be understood that the content described in this section is not intended to identify key or important features of the embodiments of the present disclosure, nor is it intended to limit the scope of the present disclosure. Other features of the present disclosure will be readily understood by the following description

### BRIEF DESCRIPTION OF THE DRAWINGS

Other features, objects and advantages of the present disclosure will become more apparent from the detailed description of non-limiting embodiments made with reference to the accompanying drawings below.
FIG. 1 is an exemplary system architecture to which the present disclosure may be applied;
FIG. 2 is a flowchart of an adaptive compensation method during video image encoding according to an embodiment of the present disclosure;
FIG. 3 is a flowchart of a method for calculating an offset value interval for each pixel under each encoding category according to an embodiment of the present disclosure;
FIG. 4 is a flowchart of a method for calculating an expected offset value corresponding to each encoding category according to offset value intervals of all pixels under each encoding category according to an embodiment of the present disclosure;
FIG. 5 is a flowchart of another method for calculating an expected offset value corresponding to each encoding category according to offset value intervals of all pixels under each encoding category according to an embodiment of the present disclosure;
FIG. 6 is a structural block diagram of an adaptive compensation apparatus during video image encoding according to an embodiment of the present disclosure;
FIG. 7 is a schematic structural diagram of an electronic device adapted to execute an adaptive compensation method during video image encoding according to an embodiment of the present disclosure.

### DETAILED DESCRIPTION OF EMBODIMENTS

Exemplary embodiments of the present disclosure are described below with reference to the accompanying drawings, which include various details of the embodiments of the present disclosure to facilitate understanding, and should be considered as merely exemplary. Accordingly, those of ordinary skill in the art will recognize that various changes and modifications may be made to the embodiments described herein without departing from the scope and spirit of the present disclosure. Also, for clarity and conciseness, descriptions of well-known functions and structures are omitted in the following description. It should be noted that the embodiments of the present disclosure and features in the embodiments may be combined with each other without conflict.

In the technical solution of the present disclosure, the collection, storage, use, processing, transmission, provision and disclosure of user personal information involved comply with relevant laws and regulations and do not violate public order and good customs.

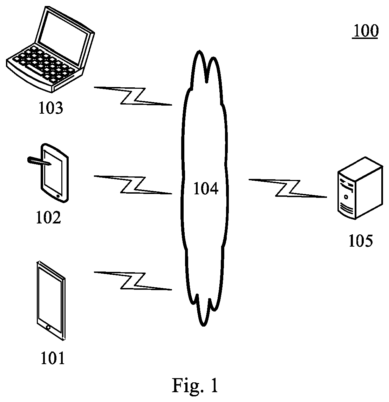

FIG. 1 illustrates an exemplary system architecture 100 to which embodiments of an adaptive compensation method during video image encoding, an apparatus, an electronic device and a computer-readable storage medium of the present disclosure may be applied.

As shown in FIG. 1, the system architecture 100 may include terminal devices 101, 102, 103, a network 104 and a server 105. The network 104 serves as a medium for providing a communication link between the terminal devices 101, 102, 103 and the server 105. The network 104 may include various connection types, such as wired, wireless communication links or fiber optic cables and the like.

A user may use the terminal devices 101, 102, 103 to interact with the server 105 via the network 104 to receive or send messages and the like. Various applications for implementing information communication between the two parties, such as video image encoding applications, video image decoding applications, instant messaging applications and the like, may be installed on the terminal devices 101, 102, 103 and the server 105.

The terminal devices 101, 102, 103 and the server 105 may be hardware or software. When the terminal devices 101, 102, 103 are hardware, they may be various electronic devices with display screens, including but not limited to smart phones, tablet computers, laptop portable computers and desktop computers and the like; when the terminal devices 101, 102, 103 are software, they may be installed in the electronic devices listed above, and may be implemented as a plurality of software pieces or software modules, or as a single software piece or software module, which is not specifically limited herein. When the server 105 is hardware, it may be implemented as a distributed server cluster composed of a plurality of servers, or as a single server; when the server is software, it may be implemented as a plurality of software or software modules, or as a single software or software module, which is not specifically limited herein.

The server 105 may provide various services through various built-in applications. Taking a video image encoding application capable of providing a video image encoding service as an example, the server 105 may achieve the following effects when running the video image encoding application: first, acquiring an original pixel value array of an original pixel block to be encoded in loop filtering processing of video image encoding; next, acquiring a reconstructed pixel value array of a reconstructed pixel block obtained by reconstructing the original pixel block; next, determining an encoding category to which each pixel in the reconstructed pixel block belongs, and a respective target pixel value of each pixel simultaneously satisfying at least two optimization objectives; then, for each pixel under each encoding category, determining a first offset value according to an original pixel value of the pixel in the original pixel value array and a reconstructed pixel value of the pixel in the reconstructed pixel value array; determining a second offset value according to the target pixel value of the pixel and the reconstructed pixel value; determining an offset value interval of the pixel according to magnitudes of the first offset value and the second offset value; next, performing frequency statistics on integer offset values respectively included in offset value intervals of all pixels under each encoding category, and determining an expected offset value of the corresponding encoding category based on a statistical result obtained; finally, compensating a corresponding reconstructed pixel value for each pixel according to the expected offset value corresponding to the encoding category to which the pixel belongs.

Further, the server 105 may further transmit an encoding result corresponding to an expected reconstructed pixel block obtained by the compensation processing to the terminal devices 101, 102, 103, so that a corresponding video picture is presented to a user on the terminal devices through a built-in video image decoding application after decoding.

It should be pointed out that the original pixel block to be encoded may be acquired from the terminal devices 101, 102, 103 through the network 104, and may also be pre-stored locally in the server 105 in various ways. Therefore, when the server 105 detects that such data are already stored locally (for example, a to-be-processed encoding task retained before starting processing), it may choose to directly acquire such data locally, and in this case, the exemplary system architecture 100 may not include the terminal devices 101, 102, 103 and the network 104.

Since encoding of a video image requires a lot of computing resources and strong computing power, the adaptive compensation method during video image encoding provided by the subsequent embodiments of the present disclosure is generally executed by the server 105 with strong computing power and many computing resources, and accordingly, the adaptive compensation apparatus during video image encoding is also generally disposed in the server 105. Meanwhile, it should also be pointed out that when the terminal devices 101, 102, 103 also have computing power and computing resources meeting requirements, the terminal devices 101, 102, 103 may also complete various computations assigned to the server 105 through a video image encoding application installed thereon, so as to output the same result as the server 105. Especially when there are a variety of terminal devices with different computing capabilities at the same time, but the video image encoding application determines that the terminal device on which it is located has strong computing power and a large amount of remaining computing resources, the terminal device may execute the above computation, so as to appropriately reduce the computing pressure of the server 105, and accordingly, the adaptive compensation apparatus during video image encoding may also be disposed in the terminal devices 101, 102, 103. In this case, the exemplary system architecture 100 may not include the server 105 and the network 104.

It should be understood that the numbers of terminal devices, networks and servers in FIG. 1 are merely illustrative. Any number of terminal devices, networks and servers may be provided according to implementation requirements.

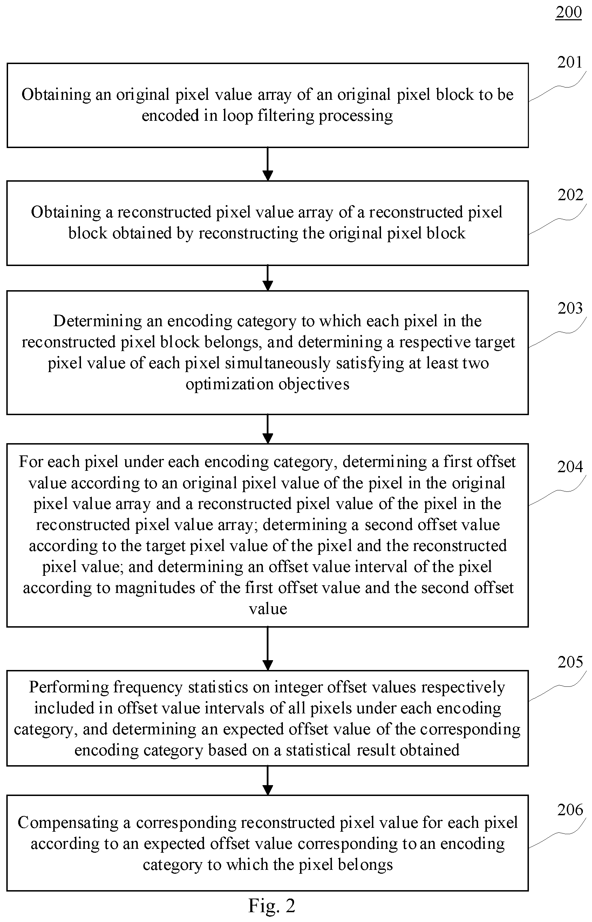

Reference is made to FIG. 2, which is a flowchart of an adaptive compensation method during video image encoding according to an embodiment of the present disclosure, where a process 200 includes the following steps.

Step 201: Obtaining an original pixel value array of an original pixel block to be encoded in loop filtering processing.

Step 201 aims to acquire, by an execution body of the adaptive compensation method during video image encoding (such as the server 105 shown in FIG. 1), an original pixel value array of an original pixel block to be encoded in loop filtering processing of video image encoding.

The loop filtering processing defines a specific stage and scenario where the action described in this step occurs. That is, in modern hybrid video coding frameworks (such as H.264/AVC, H.265/HEVC or AV1), loop filtering is a key link in an encoder reconstruction loop, and mainly includes deblocking filtering and sample adaptive compensation. A current stage refers to a stage where the encoder logic is about to enter or is in a sub-filtering stage of sample adaptive compensation, and in this stage, the encoder has completed prediction, transformation, quantization, inverse quantization and inverse transformation of the current block to obtain a preliminary reconstructed pixel block with distortion. The solution provided by this embodiment is triggered to be executed at this block, aiming to apply an improved compensation value determination scheme to optimize the preliminary reconstructed block.

The original pixel block refers to an image region block (such as a maximum coding unit or a transform block) which is divided from an original video frame to be compressed and is currently being processed, and represents undistorted source data without any compression processing. The definition of "to be encoded" is used to indicate that the original pixel block is an object being processed by the current pipeline of the encoder, and on the other hand, in the internal logic of the encoder, although data of the block is being used for calculation, original pixel values corresponding thereto are usually pre-stored in a specific buffer area or data structure to ensure fast and accurate access when reference is needed. That is, it does not mean that the block has not started to be encoded, but emphasizes that original data thereof is still available and to be referenced in a filtering link.

The original pixel value array is a structural and concrete representation of data contained in the original pixel block. A pixel value is a luminance and/or chrominance component value of each pixel point, and these values are original light and color information captured by a sensor or generated by a computer. Original pixel values are usually derived from original video frame data loaded during initialization of the encoder, and in an internal memory, an entire frame of original pixels is divided into a plurality of blocks, and a corresponding buffer area is maintained for each block or the entire frame. The array defines an organization form of these pixel values in the encoder memory, that is, usually a matrix data structure whose width and height completely correspond to a size of a currently processed video block (for example, 4x4, 8x8, 16x16, etc.). By means of the form of "array", the encoder can efficiently locate and access an original value of any pixel point through row and column indexes.

In order to obtain the original pixel value array, according to a position (such as coordinates in a frame) and size information of a currently processed block, the encoder extracts, through memory addressing, a part of original pixel data which is completely corresponding to a spatial position of the current "reconstructed pixel block" from an original frame buffer area, organizes the part of original pixel data into the form of "array", and loads the form of "array" into a register or a local cache of a processing unit for subsequent calculation.

That is, this step aims to describe that when an encoder process proceeds to a sample adaptive compensation link of a loop filtering stage, according to position information of a currently processed reconstructed block, original pixel data which is corresponding to the reconstructed block and is not compressed is located and extracted from original video frame data, and is organized into a matrix form, so as to lay a foundation for execution of subsequent steps.

Step 202: Obtaining a reconstructed pixel value array of a reconstructed pixel block obtained by reconstructing the original pixel block.

On the basis of Step 201, this step aims to obtain, by the execution body, a reconstructed pixel value array of a reconstructed pixel block obtained by reconstructing the original pixel block.

The reconstruction operation is a core closed-loop operation in a hybrid video coding framework. Specifically, an encoder performs prediction (intra-frame or inter-frame prediction) on an original pixel block to obtain a residual error, then performs transformation and quantization on the residual error to obtain a codeable coefficient, and then immediately performs inverse quantization and inverse transformation for subsequent prediction reference, and adds the obtained residual error to a predicted value to reconstruct a decoded pixel block. This process is a reconstruction process described in this step, and the obtained reconstructed pixel block usually represents a version obtained by performing lossy compression and decoding restoration on the original pixel block, and distortion caused by operations such as quantization is inevitably introduced. The reconstructed pixel block represents a picture finally seen by a decoding end without any post-processing (such as sample adaptive compensation). A difference exists between the reconstructed pixel block and the original pixel block, and the difference is required to be compensated as much as possible in a subsequent filtering link.

The data of the reconstructed pixel block is from an output cache of an internal reconstruction loop of the encoder. In a coding pipeline, after a block completes inverse quantization, inverse transformation and addition with a predicted value, a reconstruction result is temporarily stored in a specified memory area. This step performs an acquisition operation when a sample adaptive compensation filter is called, and a latest reconstruction result which is not subjected to any sample adaptive compensation filtering is read from the cache. All compensation calculation strategies provided in subsequent steps are based on the unfiltered reference state, so as to optimize the unfiltered reference state through the solution provided by this embodiment, thereby generating a better final reconstruction result.

Step 203: Determining an encoding category to which each pixel in the reconstructed pixel block belongs, and determining a respective target pixel value of each pixel simultaneously satisfying at least two optimization objectives.

On the basis of Step 202, this step aims to determine, by the execution body, an encoding category to which each pixel in the reconstructed pixel block belongs, and determine a respective target pixel value of each pixel simultaneously satisfying at least two optimization objectives.

In an operation of determining the encoding category to which each pixel belongs, each pixel in the reconstructed pixel block is usually classified based on established rules of an existing coding classification standard, and the classification aims to group pixels with similar visual characteristics so as to apply a unified compensation strategy subsequently. Taking an HEVC/H.265 encoder as an example, a filtering mode thereof includes band offset and edge offset. The band offset classifies pixels into up to 32 categories (i.e., bands) according to a predefined numerical range within which a reconstructed luminance value of each pixel falls, and is mainly used for processing color or luminance distortion in a smooth region. The edge offset classifies pixels into specific edge direction modes (usually 5 categories) according to a gradient relationship between a pixel and direct neighborhood pixels (such as left, top, right, bottom and middle) thereof, and is mainly used for identifying and enhancing edge structures in an image. Usually, one pixel point is classified into only one of band compensation and edge compensation, that is, it is either one of the 32 categories mentioned above or one of the 5 categories mentioned above.

Certainly, in addition to directly adopting the coding classification standard of the existing video encoder, a target coding classification standard may be determined on the basis of the coding classification standard of the existing video encoder. Specifically, the coding classification standard of the existing video encoder may be adjusted according to a customized requirement to obtain a target coding classification standard. The adjusting the classification standard according to a customized requirement may further include: increasing the number of subcategories under a specified encoding category (for example, increasing the 32 subcategories to 33), adjusting a coverage range of original subcategories under the specified encoding category, and the like. Then, the encoding category to which each pixel belongs is determined by using the target coding classification standard.

In the operation of determining a respective target pixel value of each pixel simultaneously satisfying at least two optimization objectives, this operation calculates a "target pixel value" for each pixel, and the value is a key for realizing multi-objective collaborative optimization. The target pixel value is defined as: an ideal value to which the pixel should be reconstructed in an ideal situation under the common constraint of at least two different optimization objectives.

A specific implementation manner including but not limited to the following may include: first, determining an optimization objective set including at least two different optimization objectives according to an obtained actual optimization requirement; then, for each pixel of the reconstructed pixel block, determining a target pixel value simultaneously satisfying all optimization objectives in the optimization objective set. The optimization objectives may include original-image-referenced optimization objectives and original-image-free optimization objectives (certainly, classification may be performed according to other classification dimensions, for example, classification may be performed according to whether the optimization objectives are mainly used for improving human eye viewing experience). The original-image-referenced optimization objectives may include at least one of mean square error (MSE), peak signal-to-noise ratio (PSNR), structural similarity (SSIM), feature similarity (FSIM), gradient magnitude similarity deviation (GMSD), and video multimethod assessment fusion (VMAF). The original-image-free optimization objectives include at least one of: sharpness enhancement (enhancing detail clarity through edge sharpening and super-resolution techniques, for example, using a Laplacian operator for edge detection), noise suppression (reducing compression noise, for example, a non-local means filtering-based denoising algorithm), color enhancement (adjusting saturation/contrast, such as adaptive histogram equalization, to improve over-dark or over-exposed regions), artifact repair (eliminating texture distortion caused by compression, for example, using a generative adversarial network to repair mosaic regions), and a subjective quality assessment model (using No-Reference Image Quality Assessment metrics: Blind/Referenceless Image Spatial Quality Evaluator (BRISQUE), Natural Image Quality Evaluator (NIQE), and No-Reference Quality Assessment via Contrast Learning (CONTRIQUE)).

At a specific practical level, the encoder may calculate, for each pixel, an expected value capable of optimally balancing these objectives through an internal decision mechanism according to a preset optimization objective set (such as T = [PSNR, SSIM]). The value may not be real, but a calculated theoretical optimal value, and the theoretical optimal value is used as an expectation for guiding a compensation direction, so that a new optimization dimension is added to a traditional manner only depending on an original pixel value.

In a case where the optimization objectives are specifically divided into two types: original-image-referenced optimization objectives and original-image-free optimization objectives, for a case where an actual resolution of an original image corresponding to the original pixel block is higher than a preset resolution, at least one of the original-image-referenced optimization objectives may be determined as an optimization objective used for obtaining a target pixel value of the pixel; for a case where an actual resolution of an original image corresponding to the original pixel block is lower than a preset resolution, at least one of the original-image-free optimization objectives may be determined as an optimization objective used for obtaining a target pixel value of the pixel.

Step 204: For each pixel under each encoding category, determining a first offset value according to an original pixel value of the pixel in the original pixel value array and a reconstructed pixel value of the pixel in the reconstructed pixel value array; determining a second offset value according to the target pixel value of the pixel and the reconstructed pixel value; and determining an offset value interval of the pixel according to magnitudes of the first offset value and the second offset value.

On the basis of Step 203, this step aims to calculate, for each pixel, a feasible range of a compensation value by the execution body. Firstly, a first offset value is calculated, that is, an original pixel value of the pixel minus a reconstructed pixel value thereof, and the first offset value represents a traditional compensation direction when only a single distortion minimization (such as PSNR) is considered. Secondly, a second offset value is calculated, that is, a multi-objective optimization ideal value (target pixel value) of the pixel minus a reconstructed pixel value thereof, and the second offset value represents an ideal compensation direction when a plurality of image quality indexes are comprehensively optimized. Finally, by comparing the two offset values, a smaller one is used as a lower limit of a feasible range, and a larger one is used as an upper limit, so as to determine an offset value interval of the pixel, and the interval jointly constrains all possible compensation values under basic fidelity and multi-objective guidance.

It should be noted that, since the reconstructed pixel block is obtained based on the original pixel block after a reconstruction operation, all pixels constituting the reconstructed pixel block and all pixels constituting the original pixel block may not be completely identical, but a corresponding relationship corresponding to the reconstruction operation is necessarily present between the two. Therefore, for each pixel of the reconstructed pixel block, an original pixel value may still be determined through the corresponding relationship in this step.

Step 205: Performing frequency statistics on integer offset values respectively included in offset value intervals of all pixels under each encoding category, and determining an expected offset value of the corresponding encoding category based on a statistical result obtained.

On the basis of Step 204, this step aims to perform frequency statistics on integer offset values respectively included in offset value intervals of all pixels under each encoding category, and determine an expected offset value of the corresponding encoding category based on a statistical result obtained.

An object of frequency statistics is all pixels under a specific encoding category (such as an edge direction category or a luminance band category). A specific processing logic is as follows: checking an offset value interval (such as [a, b]) of each pixel one by one, and performing counting accumulation for each integer offset value (such as a, a+1, a+2, ..., b) falling within the interval, which means that the statistical count of an integer offset value is increased by 1 as long as the integer offset value is covered by the interval of a certain pixel. After traversing all pixels of the category, each integer offset value has a corresponding frequency count.

The determining an expected offset value is data arrangement based on the statistical result, that is, all possible integer offset values are combined with corresponding occurrence frequencies to calculate a statistical expected value of the category (usually a quotient of a sum of products of each integer offset value and its occurrence frequency, and a sum of all occurrence frequencies). The expected value mathematically represents an average optimal direction of all feasible compensation values of the category under multi-objective constraint, and thus is selected as a unified final compensation value of the category.

Step 206: Compensating a corresponding reconstructed pixel value for each pixel according to an expected offset value corresponding to an encoding category to which the pixel belongs.

Based on the result of step 205, this step aims to have the execution subject make full use of its output to perform actual correction on the reconstructed pixel value array. The specific operation is: for each pixel, according to its determined encoding category, indexing to an expected offset value uniquely corresponding to the category and calculated in step 205, and then directly adding this value to the current reconstructed value of the pixel, that is, the addition operation is the "compensation," thereby achieving, on the premise of maintaining full compatibility with existing encoding standard syntax (since only one compensation value is written for each category), a final reconstructed picture effect that is no longer a result of optimizing a single distortion target in the traditional sense, but rather enhances a comprehensive visual experience under the combined action of multiple predetermined optimization objectives.

The adaptive compensation method during video image encoding provided by embodiments of the present disclosure is directed to an original pixel block in a to-be-encoded state during loop filtering processing. First, an original pixel value array of the original pixel block and a reconstructed pixel value array of a reconstructed pixel block obtained by reconstruction are obtained. Then, target pixel values of each pixel of the reconstructed pixel block simultaneously satisfying multiple optimization objectives are determined. Subsequently, after determining an encoding category to which each pixel belongs, for each pixel under each encoding category, two offset values are calculated based on the reconstructed pixel value with respect to the original pixel value and the target pixel value respectively, and integer offset values contained in an offset value interval determined therefrom are determined, and an expected offset value of a corresponding encoding category is then calculated based on an occurrence number of each integer offset value in the offset value intervals under the corresponding category, thereby enabling adaptive compensation according to the expected offset value corresponding to the encoding category. That is, in this manner, offset values considering multiple optimization objectives may be used for compensating pixel values, thereby achieving improved encoding performance.

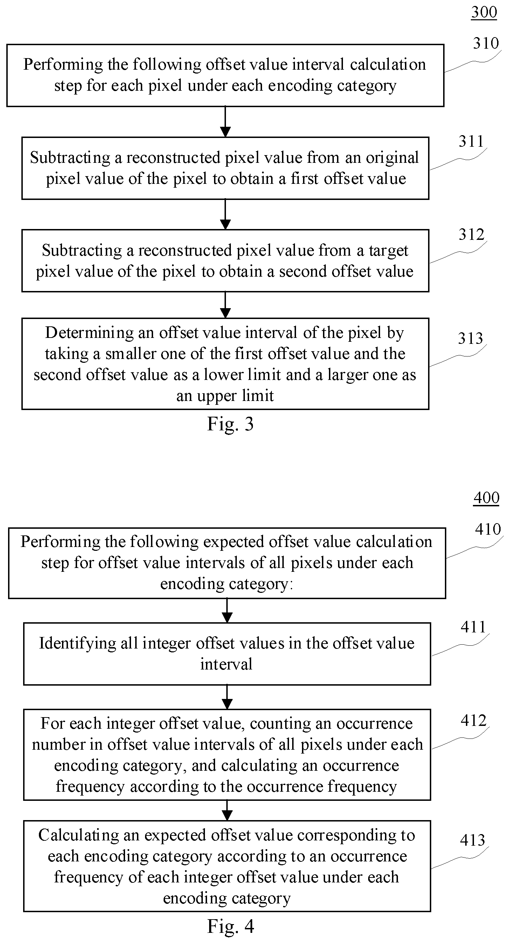

For further understanding of Step 204, reference is further made to FIG. 3, which is a flowchart of a method for calculating an offset value interval for each pixel under each encoding category according to an embodiment of the present disclosure, where a process 300 includes the following steps.

Step 310: Performing the following offset value interval calculation step for each pixel under each encoding category:
Step 311: Subtracting a reconstructed pixel value from an original pixel value of the pixel to obtain a first offset value.

This step performs the core calculation of a traditional compensation algorithm: subtracting the reconstructed pixel value from the original pixel value of the current pixel to obtain a first offset value. This operation quantifies an absolute error between the current reconstructed value and the lossless original image, and this value represents the most direct and simplest compensation direction for the pixel when only "minimizing distortion" is taken as a single objective.

Step 312: Subtracting a reconstructed pixel value from a target pixel value of the pixel to obtain a second offset value.

This step embodies the newly introduced multi-objective optimization concept: subtracting the reconstructed pixel value of the same pixel from its target pixel value (i.e., an ideal value jointly determined by preset multiple optimization objectives) to obtain a second offset value. This operation quantifies a gap between the current reconstructed value and a multi-objective theoretical optimal value, and this value represents a more advanced and more intelligent compensation direction for the pixel after comprehensively considering multiple image quality metrics.

Step 313: Determining an offset value interval of the pixel by taking a smaller one of the first offset value and the second offset value as a lower limit and a larger one as an upper limit.

This step is responsible for fusing the above two offset values to generate a decision interval, and the rule is: comparing numerical values of the first offset value and the second offset value, using a smaller one as a lower bound of the offset value interval of the pixel and a larger one as an upper bound. The interval [lower bound, upper bound] determined thereby has a clear physical meaning: each integer offset value within the interval is a "feasible" compensation scheme for the pixel, and a compensation effect thereof is either better than or equal to a single-objective optimization result, or better than or equal to a multi-objective optimization result, thereby jointly constituting a Pareto-improved candidate solution set, and this interval provides a data foundation for subsequent expected value calculation.

This embodiment lays a foundation for subsequent statistical optimization through steps 310-313, that is, calculating a feasible range of compensation values (offset value interval) for each pixel for subsequent further calculation of an expected offset value corresponding to each encoding category.

For further understanding of Step 205, reference is further made to FIG. 4, which is a flowchart of a method for calculating an expected offset value corresponding to each encoding category according to offset value intervals of all pixels under each encoding category according to an embodiment of the present disclosure, where a process 400 includes the following steps.

Step 410: Performing the following expected offset value calculation step for offset value intervals of all pixels under each encoding category.

Step 411: Identifying all integer offset values in the offset value interval.

This step aims, for a specific encoding category currently being processed (for example, all pixels classified as a "specific edge direction"), to perform an operation not on an interval of a single pixel, but to count all integer offset values that may be covered by offset value intervals of all pixels, and these integer offset values constitute a candidate value set. The reason why this embodiment only count integer offset values is mainly that in most cases, a minimum unit of an offset value is an integer and no decimal exists; if a minimum unit smaller than an integer, such as a decimal, also exists, adaptive adjustment may also be made, which is not strictly limited herein.

Step 412: For each integer offset value, counting an occurrence number in offset value intervals of all pixels under each encoding category, and calculating an occurrence frequency according to the occurrence frequency.

This step then, for each integer offset value in the candidate set obtained in the previous step, has the system check whether the integer offset value falls within the offset value interval of each pixel in the category. Each time the integer offset value falls within a pixel interval, a count is incremented by one for the integer offset value, and a total of this count is an occurrence number of the integer offset value under this encoding category. Subsequently, the occurrence number of each integer offset value is divided by a total number generated by all pixels in the category (i.e., a sum of occurrence numbers of all integer offset values) to obtain its occurrence frequency, and the frequency characterizes a universal degree to which the compensation value is accepted under multi-objective constraints of all pixels.

Step 413: Calculating an expected offset value corresponding to each encoding category according to an occurrence frequency of each integer offset value under each encoding category.

This step treats each integer offset value as a possible output, uses its corresponding occurrence frequency as a probability weight thereof, and calculates a weighted average value of all these integer offset values (i.e., a mathematical expectation). The calculated expected value is the expected offset value of the encoding category, which represents, from a statistical perspective, the compensation value that can best balance multi-objective constraints of all pixels, and will be finally written into a bitstream and used for filtering.

Through the specific implementation scheme described in steps 410-413, this embodiment condenses the offset value intervals calculated independently for each pixel in previous steps and representing multi-objective feasible regions into a unified, statistically optimal compensation value for each category of pixels, thereby achieving more accurate determination of compensation values.

On the basis of any one of the embodiments described above, after the compensation operation described in Step 206, a compensated pixel value obtained by compensating a corresponding reconstructed pixel value for each pixel according to an expected offset value corresponding to an encoding category to which the pixel belongs may be further determined, and a pixel block formed by pixels each having a pixel value being the compensated pixel value is further determined as an expected reconstructed pixel block.

Specifically, after all pixels are compensated, the encoder enters a result confirmation and data reorganization stage. In this stage, a compensated pixel value is firstly determined, that is, an expected offset value corresponding to an encoding category to which each pixel belongs is algebraically added to an original reconstructed pixel value of the pixel one by one, and a result obtained is a final optimized value of the pixel, and the value is fused with basic fidelity and multi-objective guidance and represents an ideal state of the pixel after being processed by the embodiment.

Then, the encoder constructs an expected reconstructed pixel block, which aims to reorganize all compensated pixel values into a complete two-dimensional pixel block structure according to an original spatial position relationship thereof. The newly formed pixel block is an expected reconstructed pixel block, which can represent optimal comprehensive reconstruction quality which can be achieved by a current coding block after an innovative multi-objective guided sample adaptive compensation filtering. Then, the pixel block is written into a frame buffer area, is used as a reference frame for subsequent inter-frame prediction, and is also used as optimized reconstructed image data which is output by the whole coding loop and is subjected to optimization. Picture quality of the pixel block is superior to a result obtained by a traditional single-objective optimization method in terms of a plurality of objective indexes and subjective experience.

To deepen understanding, the present disclosure also provides a specific implementation solution based on a practical application scenario:

Conventional sample adaptive offset (SAO) includes two types: edge offset (EO) and band offset (BO). Both methods first classify each reconstructed pixel, then calculate the offset value for each category of pixels, and finally write the offset value for each category into the bitstream. During decoding, the offset values are decoded from the bitstream, and the corresponding offsets are added based on the category of the reconstructed pixel.

In traditional methods, the offset value for each category is typically determined using least squares. The difference between the original pixel value and the reconstructed pixel value is calculated, and the mean difference of pixels in the same category is used as the offset value to minimize distortion. Because this method has solid theoretical support and low complexity, encoders employing SAO technology generally adopt this offset determination algorithm. However, this algorithm essentially optimizes the MSE/PSNR metric, and thus cannot address multiple optimization objectives simultaneously, such as improving subjective performance while maintaining fidelity, or enhancing other objective quality metrics that better align with subjective experience.

Based on the characteristics of SAO and the principles of multi-objective optimization, this embodiment proposes a guided SAO offset determination algorithm that uses guided information as the carrier of optimization objectives. This algorithm can obtain preferences for SAO based on a predefined set of optimization objectives and determine the sample offset for each pixel that satisfies Pareto optimality. Then, the expected offset value for each category of pixels is computed and used as the final offset for encoding and filtering. The main differences between this embodiment and conventional SAO offset determination algorithms are as follows:
1. The optimization objective is extended from single-objective to multi-objective optimization, thereby obtaining Pareto-optimal solutions that dominate the traditional SAO algorithms.
2. It is not limited to optimizing MSE/PSNR and can be extended to other optimization objectives, such as objective metrics that better align with human visual characteristics.

The complete technical process is as follows:
1. Define the optimization objective set *T* = [*t*₁*, t*₂*, t*₃*, ... , t_{Q}*]*,* where Q is the number of objectives.
2. For an original pixel block *X =* [*x*_{1,1}*, x*_{1,2}, *x*_{1*,*3}*,* ... *, x_{N,M}*] (where N is the height and M is the width), after reconstruction, the reconstructed pixel block *Y* = [*y*_{1,1}, *y*_{1,2}*, y*_{1,3}*,* . *. . , y_{N,M}*] before SAO filtering is obtained. Classification is performed according to coding standards, yielding the category *C* = [*C*_{1*,*1}*, c*_{1*,*2}*, c*_{1,3}*,* . . . *, c_{N,M}*] for each pixel, where c represents the pixel class and is a finite set. For example, when applied in an HEVC/H.265 encoder, filtering modes include BO and EO. For BO, each pixel has 32 categories, i.e., c ∈ [0,31]; for EO, each pixel has 5 categories, i.e., c ∈ [0,4].
3. Based on the defined optimization objective set T, obtain the guided information *G* = [*g*_{1,1}, *g*_{1,2}, *g*_{1,3}, *... , g_{N,M}*] for each pixel, representing the target reconstructed pixel values corresponding to T.
4. Traversing each of categories *Cₖ,* calculating an original pixel value = *x_{i,j}* minus a reconstructed pixel block pixel value - *y*_{*i*,*j*} before sample adaptive filtering to obtain an offset value *off set*1*_{i,j},* calculating a reconstructed pixel value target *g_{i,j}* minus the reconstructed pixel block pixel value*y*_{*i*,*j*} before sample adaptive filtering to obtain an offset value *offset2_{i,j},* as *offsetMin_{i,j}* and a larger one as *offsetMax_{i,j}* a to obtain an interval range, and incrementing a frequency count by one for all integers falling within the interval range
5. For each class *Cₖ,* counts, and write this expectation as the offset value for that class into the bitstream.

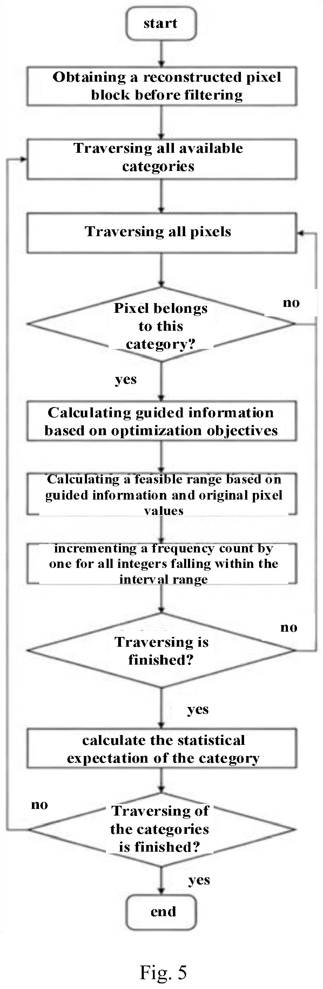

The scheme described in the above steps 4 and 5 may be referred to in FIG. 5, and FIG. 5 is a flowchart of another method for calculating an expected offset value corresponding to each encoding category based on offset value intervals of all pixels under each encoding category, provided by an embodiment of the present disclosure.

Considering that in the field of image and video encoding, evaluation of video encoding reconstruction effects may be divided into two major categories: subjective quality evaluation and objective quality evaluation. Subjective evaluation metrics use subjective experience of a user as a standard and are the evaluation manner closest to human eye visual characteristics and user experience, but have two significant problems: first, subjective experiments consume large amounts of manpower and material resources; and second, they cannot be applied to encoder optimization. Therefore, objective quality evaluation aims to find a calculation manner that can be directly computed to measure video reconstruction quality. After years of development, objective quality evaluation metrics have gradually evolved from peak signal-to-noise ratio (PSNR) based on signal fidelity to structural similarity (SSIM), video multi-method assessment fusion (VMAF), and other metrics having higher correlation with human eye subjective experience. However, currently, none of the evaluation metrics can comprehensively measure video reconstruction quality, that is, cannot completely replace one another. Therefore, in actual business, a manner of collaborative reference of multiple objective quality evaluation metrics is commonly adopted to more accurately measure performance of an image and video encoder.

Existing video encoders, after years of development and out of consideration for factors such as computational complexity, basically still use distortion based on signal fidelity as a foundation for rate-distortion optimization within the encoder, especially for solving of sample adaptive offset filtering, which leads to an inability to effectively exploit performance under a multi-objective evaluation system during the encoding process.

Based on traditional sample adaptive offset filtering, this embodiment, by using guidance information, may obtain, with low complexity, a compensation solver corresponding to a Pareto-optimal solution that dominates the traditional sample adaptive offset filtering solution, which is conducive to better encoding performance under a multi-objective quality collaborative evaluation system and achieves an advantage over competing products.

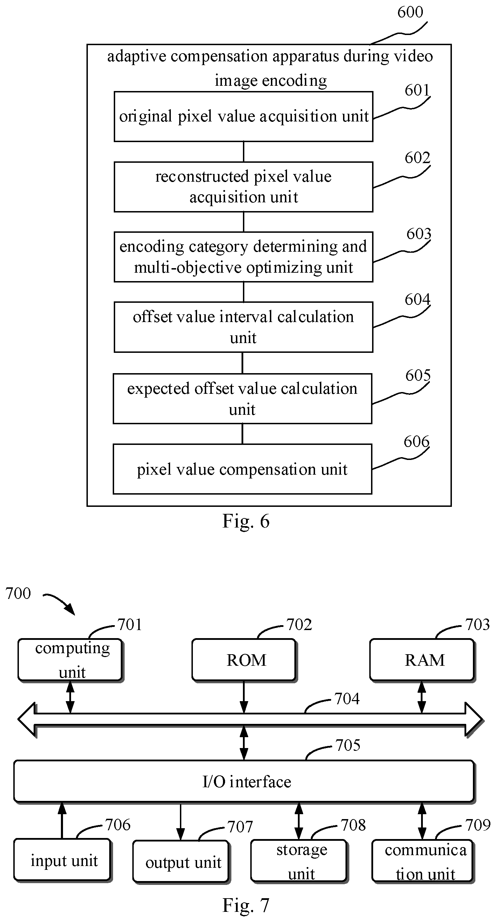

Reference is further made to FIG. 6, which is a structural block diagram of an adaptive compensation apparatus during video image encoding according to an embodiment of the present disclosure.

As shown in FIG. 6, the adaptive compensation apparatus 600 during video image encoding according to the present embodiment may include: an original pixel value acquisition unit 601, a reconstructed pixel value acquisition unit 602, an encoding category determining and multi-objective optimizing unit 603, an offset value interval calculation unit 604, an expected offset value calculation unit 605 and a pixel value compensation unit 606.

The original pixel value acquisition unit 601 is configured to obtain an original pixel value array of an original pixel block to be encoded in loop filtering processing.

The reconstructed pixel value acquisition unit 602 is configured to obtain a reconstructed pixel value array of a reconstructed pixel block obtained by reconstructing the original pixel block.

The encoding category determining and multi-objective optimizing unit 603 is configured to determine an encoding category to which each pixel in the reconstructed pixel block belongs, and determine a respective target pixel value of each pixel simultaneously satisfying at least two optimization objectives.

The offset value interval calculation unit 604 is configured to: for each pixel under each encoding category, determine a first offset value according to an original pixel value of the pixel in the original pixel value array and a reconstructed pixel value of the pixel in the reconstructed pixel value array; determine a second offset value according to the target pixel value of the pixel and the reconstructed pixel value; and determine an offset value interval of the pixel according to magnitudes of the first offset value and the second offset value.

The expected offset value calculation unit 605 is configured to perform frequency statistics on integer offset values respectively included in offset value intervals of all pixels under each encoding category, and determine an expected offset value of the corresponding encoding category based on a statistical result obtained.

The pixel value compensation unit 606 is configured to compensate a corresponding reconstructed pixel value for each pixel according to an expected offset value corresponding to an encoding category to which the pixel belongs.

In this embodiment, in the adaptive compensation apparatus 600 during video image encoding, specific processing and technical effects brought by an original pixel value acquisition unit 601, a reconstructed pixel value acquisition unit 602, an encoding category determination and multi-objective optimization unit 603, an offset value interval calculation unit 604, an expected offset value calculation unit 605, and a pixel value compensation unit 606 may respectively refer to relevant descriptions of steps 201-206 in the corresponding embodiment of FIG. 2, which are not repeated herein.

In some optional implementations of the present embodiment, the encoding category determining and multi-objective optimizing unit 603 includes a multi-objective optimization sub-unit configured to determine a respective target pixel value of each pixel simultaneously satisfying at least two optimization objectives.

The multi-objective optimization sub-unit may be further configured to:
determine an optimization objective set including at least two different optimization objectives according to an obtained actual optimization requirement; and
for each pixel of the reconstructed pixel block, determine a target pixel value simultaneously satisfying all optimization objectives in the optimization objective set.

In some optional implementations of the present embodiment, the optimization objectives include: original-image-referenced optimization objectives and original-image-free optimization objectives. The original-image-referenced optimization objectives include at least one of mean square error, peak signal-to-noise ratio, structural similarity, feature similarity, gradient magnitude similarity deviation, and video multimethod assessment fusion. The original-image-free optimization objectives include at least one of sharpness enhancement, noise suppression, color enhancement, artifact repair, and a subjective quality assessment model.

In some optional implementations of the present embodiment, in response to that an actual resolution of an original image corresponding to the original pixel block is higher than a preset resolution, the optimization objective required for determining a target pixel value of the pixel includes at least one of the original-image-referenced optimization objectives.

In some optional implementations of the present embodiment, in response to that an actual resolution of an original image corresponding to the original pixel block is lower than a preset resolution, the optimization objective required for determining a target pixel value of the pixel includes at least one of the original-image-free optimization objectives.

In some optional implementations of the present embodiment, the encoding category determining and multi-objective optimizing unit 603 includes an encoding category determining sub-unit configured to determine an encoding category to which each pixel in the reconstructed pixel block belongs.

The encoding category determining sub-unit may include:
a target classification standard determining module configured to determine a target encoding classification standard based on an encoding classification standard of an existing video encoder; and
an encoding category determining module configured to respectively determine the encoding category to which each pixel belongs by using the target encoding classification standard.

In some optional implementations of the present embodiment, the target classification standard determining module may be further configured to:
adjust the encoding classification standard of the existing video encoder according to a customized requirement to obtain the target encoding classification standard.

The adjusting the classification standard according to a customized requirement includes: increasing the number of subcategories under a specified encoding category, and adjusting coverage ranges of original subcategories under the specified encoding category.

In some optional implementations of the present embodiment, the offset value interval calculation unit 604 may be further configured to:
for each pixel under each encoding category, perform the following offset value interval calculation step:
subtracting a reconstructed pixel value from an original pixel value of the pixel to obtain a first offset value;
subtracting a reconstructed pixel value from a target pixel value of the pixel to obtain a second offset value; and
determining an offset value interval of the pixel by taking a smaller one of the first offset value and the second offset value as a lower limit and a larger one as an upper limit.

In some optional implementations of the present embodiment, the expected offset value calculation unit 605 may be further configured to:
for each offset value interval of all pixels under each encoding category, perform the following expected offset value calculation step:
identifying all integer offset values in the offset value interval;
for each integer offset value, counting an occurrence number in offset value intervals of all pixels under each encoding category, and calculating an occurrence frequency according to the occurrence frequency; and
calculating an expected offset value corresponding to each encoding category according to an occurrence frequency of each integer offset value under each encoding category.

In some optional implementations of the present embodiment, the adaptive compensation apparatus 600 during video image encoding may further include:
a compensated pixel value determining unit configured to determine a compensated pixel value obtained by compensating a corresponding reconstructed pixel value for each pixel according to an expected offset value corresponding to an encoding category to which the pixel belongs; and
an expected reconstructed pixel block determining unit configured to determine a pixel block formed by pixels each having a pixel value being the compensated pixel value as an expected reconstructed pixel block.

This embodiment exists as an apparatus embodiment corresponding to the above method embodiment. The adaptive compensation apparatus during video image encoding provided by this embodiment is directed to an original pixel block in a to-be-encoded state during loop filtering processing. First, an original pixel value array of the original pixel block and a reconstructed pixel value array of a reconstructed pixel block obtained by reconstruction are obtained. Then, target pixel values of each pixel of the reconstructed pixel block simultaneously satisfying multiple optimization objectives are determined. Subsequently, after determining an encoding category to which each pixel belongs, for each pixel under each encoding category, two offset values are calculated based on the reconstructed pixel value with respect to the original pixel value and the target pixel value respectively, and integer offset values contained in an offset value interval determined therefrom are determined, and an expected offset value of a corresponding encoding category is then calculated based on occurrence frequencies of each integer offset value in the offset value intervals under the corresponding category, thereby enabling adaptive compensation according to the expected offset value corresponding to the encoding category. That is, in this manner, offset values considering multiple optimization objectives may be used for compensating pixel values, thereby achieving improved encoding performance.

According to an embodiment of the present disclosure, the present disclosure further provides an electronic device, including:
at least one processor; and
a memory communicatively connected to the at least one processor;
where the memory stores instructions executable by the at least one processor, and the instructions, when executed by the at least one processor, cause the at least one processor to implement the adaptive compensation method during video image encoding according to any one of the embodiments described above.

According to an embodiment of the present disclosure, the present disclosure further provides a computer-readable storage medium storing computer instructions, where the computer instructions are configured to cause a computer to implement the adaptive compensation method during video image encoding according to any one of the embodiments described above.

According to an embodiment of the present disclosure, the present disclosure further provides a computer program product including a computer program, where the computer program, when executed by a processor, implements the steps of the adaptive compensation method during video image encoding according to any one of the embodiments described above.

FIG. 7 illustrates a schematic block diagram of an exemplary electronic device 700 that may be used to implement embodiments of the present disclosure. The electronic device is intended to represent various forms of digital computers, such as laptop computers, desktop computers, workstations, personal digital assistants, servers, blade servers, mainframe computers, and other suitable computers. The electronic device may also represent various forms of mobile devices, such as personal digital processors, cellular phones, smart phones, wearable devices, and other similar computing devices. The components shown herein, their connections and relationships, and their functions are merely examples, and are not intended to limit implementations of the present disclosure described and/or claimed herein.

As shown in FIG. 7, the device 700 includes a computing unit 701 that may perform various appropriate actions and processes according to a computer program stored in a read-only memory (ROM) 702 or a computer program loaded from a storage unit 708 to a random access memory (RAM) 703. Various programs and data required for operation of the device 700 may also be stored in the RAM 703. The computing unit 701, the ROM 702 and the RAM 703 are connected to each other through a bus 704. An input/output (I/O) interface 705 is also connected to the bus 704.

A plurality of components in the device 700 are connected to the I/O interface 705, including: an input unit 706 such as a keyboard and a mouse; an output unit 707 such as various types of displays and speakers; a storage unit 708 such as a magnetic disk and an optical disk; and a communication unit 709 such as a network card, a modem and a wireless communication transceiver. The communication unit 709 allows the device 700 to exchange information/data with other devices via a computer network such as the Internet and/or various telecommunication networks.

The computing unit 701 may be various general-purpose and/or dedicated processing components having processing and computing capabilities. Some examples of the computing unit 701 include, but are not limited to, a central processing unit (CPU), a graphics processing unit (GPU), various dedicated artificial intelligence (AI) computing chips, various computing units running machine learning model algorithms, a digital signal processor (DSP), and any suitable processor, controller, microcontroller, and the like. The computing unit 701 executes the various methods and processes described above, for example, the adaptive compensation method during video image encoding. For example, in some embodiments, the adaptive compensation method during video image encoding may be implemented as a computer software program tangibly embodied in a machine-readable medium, such as the storage unit 708. In some embodiments, part or all of the computer program may be loaded and/or installed onto the device 700 via the ROM 702 and/or the communication unit 709. When the computer program is loaded into the RAM 703 and executed by the computing unit 701, one or more steps of the adaptive compensation method during video image encoding described above may be executed. Alternatively, in other embodiments, the computing unit 701 may be configured to execute the adaptive compensation method during video image encoding by any other suitable means (for example, by means of firmware).

The various implementations of the systems and technologies described herein may be implemented in digital electronic circuitry, integrated circuit systems, field programmable gate arrays (FPGA), application specific integrated circuits (ASIC), application specific standard products (ASSP), system on a chip (SOC), complex programmable logic devices (CPLD), computer hardware, firmware, software, and/or combinations thereof. These various implementations may include: being implemented in one or more computer programs, which are executable and/or interpretable on a programmable system including at least one programmable processor, which may be a dedicated or general-purpose programmable processor, capable of receiving data and instructions from a storage system, at least one input device, and at least one output device, and transmitting data and instructions to the storage system, the at least one input device, and the at least one output device.

Program code for implementing the methods of the present disclosure may be written in any combination of one or more programming languages. These program codes may be provided to a processor or controller of a general-purpose computer, a dedicated computer, or other programmable data processing apparatus, such that the program codes, when executed by the processor or controller, implement the functions/operations specified in the flowcharts and/or block diagrams. The program code may execute entirely on a machine, partly on a machine, as a stand-alone software package partly on a machine and partly on a remote machine, or entirely on a remote machine or server.

In the context of the present disclosure, a machine-readable medium may be a tangible medium that may contain or store a program for use by or in combination with an instruction execution system, apparatus, or device. The machine-readable medium may be a machine-readable signal medium or a machine-readable storage medium. The machine-readable medium may include, but is not limited to, an electronic, magnetic, optical, electromagnetic, infrared, or semiconductor system, apparatus, or device, or any suitable combination of the above. More specific examples of a machine-readable storage medium would include an electrical connection based on one or more wires, a portable computer diskette, a hard disk, a random access memory (RAM), a read-only memory (ROM), an erasable programmable read-only memory (EPROM or flash memory), an optical fiber, a portable compact disc read-only memory (CD-ROM), an optical storage device, a magnetic storage device, or any suitable combination of the above.

To provide interaction with a user, the systems and technologies described herein may be implemented on a computer having: a display device (for example, a CRT (cathode ray tube) or LCD (liquid crystal display) monitor) for displaying information to the user; and a keyboard and a pointing device (for example, a mouse or a trackball) through which the user may provide input to the computer. Other kinds of devices may also be used to provide interaction with the user; for example, feedback provided to the user may be in any form of sensory feedback (for example, visual feedback, auditory feedback, or tactile feedback); and input from the user may be received in any form, including acoustic input, voice input, or tactile input.

The systems and technologies described herein may be implemented in a computing system including back-end components (for example, as a data server), or a computing system including middleware components (for example, an application server), or a computing system including front-end components (for example, a user computer having a graphical user interface or a web browser through which the user may interact with implementations of the systems and technologies described herein), or any combination of such back-end, middleware, or front-end components. The components of the system may be interconnected by any form or medium of digital data communication (for example, a communication network). Examples of communication networks include: a local area network (LAN), a wide area network (WAN), and the Internet.

A computer system may include a client and a server. The client and the server are generally remote from each other and typically interact through a communication network. The relationship of the client and the server is generated by computer programs running on the respective computers and having a client-server relationship with each other. The server may be a cloud server, also known as a cloud computing server or cloud host, which is a host product in a cloud computing service system, to solve the problems of difficult management and weak business scalability existing in traditional physical hosts and virtual private server (VPS) services.

According to the technical solution of the embodiments of the present disclosure, for an original pixel block in a to-be-encoded state during loop filtering processing, an original pixel value array of the original pixel block and a reconstructed pixel value array of a reconstructed pixel block obtained by reconstruction are first obtained. Then, a target pixel value of each pixel of the reconstructed pixel block which simultaneously satisfies multiple optimization objectives is determined. Subsequently, after determining an encoding category to which each pixel belongs, for each pixel under each encoding category, two offset values are calculated based on the reconstructed pixel value with respect to the original pixel value and the target pixel value respectively, and integer offset values contained in an offset value interval determined therefrom are determined. An expected offset value of a corresponding encoding category is then calculated based on occurrence frequencies of each integer offset value in the offset value intervals under the corresponding category, thereby enabling adaptive compensation according to the expected offset value corresponding to the encoding category. That is, in this manner, offset values considering multiple optimization objectives may be used for compensating pixel values, thereby achieving improved encoding performance.

It should be understood that the steps of reordering, adding or deleting may be performed using the various forms of flows shown above. For example, the steps described in the present disclosure may be executed in parallel, sequentially, or in a different order, so long as the desired results of the technical solutions disclosed in the present disclosure can be achieved, and no limitation is imposed herein.

The foregoing detailed description is not intended to limit the scope of the present disclosure. It will be appreciated by those skilled in the art that various modifications, combinations, sub-combinations, and substitutions may be made depending on design requirements and other factors. Any modifications, equivalents, and improvements made within the spirit and principles of the present disclosure shall be included within the scope of protection of the present disclosure.

## Claims

1. An adaptive compensation method during video image encoding, comprising:
obtaining (201) an original pixel value array of an original pixel block to be encoded in loop filtering processing;
obtaining (202) a reconstructed pixel value array of a reconstructed pixel block obtained by reconstructing the original pixel block;
determining (203) an encoding category to which each pixel in the reconstructed pixel block belongs, and determining a respective target pixel value of the each pixel simultaneously satisfying at least two optimization objectives;
for each pixel under each encoding category: determining (204) a first offset value according to an original pixel value of the pixel in the original pixel value array and a reconstructed pixel value of the pixel in the reconstructed pixel value array; determining a second offset value according to the target pixel value of the pixel and the reconstructed pixel value; and determining an offset value interval of the pixel according to magnitudes of the first offset value and the second offset value;
performing (205) frequency statistics on integer offset values respectively included in offset value intervals of all pixels under each encoding category, and determining an expected offset value of the corresponding encoding category based on a statistical result obtained; and
compensating (206) a corresponding reconstructed pixel value for each pixel according to the expected offset value corresponding to the encoding category to which the pixel belongs.

2. The method according to claim 1, wherein the determining the respective target pixel value of each pixel simultaneously satisfying at least two optimization objectives comprises:
determining an optimization objective set including at least two different optimization objectives according to an obtained actual optimization requirement; and
for each pixel of the reconstructed pixel block, determining a target pixel value simultaneously satisfying all optimization objectives in the optimization objective set.

3. The method according to claim 1, wherein the optimization objectives comprise: original-image-referenced optimization objectives and original-image-free optimization objectives, the original-image-referenced optimization objectives comprise at least one of mean square error, peak signal-to-noise ratio, structural similarity, feature similarity, gradient magnitude similarity deviation, or video multi-method assessment fusion, and the original-image-free optimization objectives comprise at least one of sharpness enhancement, noise suppression, color enhancement, artifact repair, or subjective quality assessment model.

4. The method according to claim 3, wherein in response to an actual resolution of an original image corresponding to the original pixel block being higher than a preset resolution, the optimization objective used for determining the target pixel value of the pixel comprises at least one of the original-image-referenced optimization objectives.

5. The method according to claim 3, wherein in response to an actual resolution of an original image corresponding to the original pixel block being lower than a preset resolution, the optimization objectives used for determining the target pixel value of the pixel comprise at least one of the original-image-free optimization objectives.

6. The method according to claim 1, wherein the determining the encoding category to which each pixel in the reconstructed pixel block belongs comprises:
determining a target encoding classification standard based on an encoding classification standard of an existing video encoder; and
respectively determining the encoding category to which each pixel belongs by using the target encoding classification standard.

7. The method according to claim 6, wherein the determining the target encoding classification standard based on the encoding classification standard of the existing video encoder comprises:
adjusting the encoding classification standard of the existing video encoder according to a customized requirement to obtain the target encoding classification standard; wherein the adjusting the classification standard according to the customized requirement comprises: increasing a number of subcategories under a specified encoding category, and adjusting coverage ranges of original subcategories under the specified encoding category.

8. The method according to claim 1, wherein the for each pixel under each encoding category: determining the first offset value according to the original pixel value of the pixel in the original pixel value array and the reconstructed pixel value of the pixel in the reconstructed pixel value array; determining the second offset value according to the target pixel value of the pixel and the reconstructed pixel value; and determining the offset value interval of the pixel according to magnitudes of the first offset value and the second offset value, comprises:
for each pixel under each encoding category, performing (310) following steps of calculating the offset value interval:
subtracting (311) the reconstructed pixel value from the original pixel value of the pixel to obtain the first offset value;
subtracting (312) the reconstructed pixel value from the target pixel value of the pixel to obtain the second offset value; and
determining (313) the offset value interval of the pixel by taking a smaller one of the first offset value and the second offset value as a lower limit and a larger one of the first offset value and the second offset value as an upper limit.

9. The method according to claim 1, wherein the performing frequency statistics on integer offset values respectively included in the offset value intervals of all pixels under each encoding category, and determining the expected offset value of the corresponding encoding category based on the statistical result obtained comprises:
for each offset value interval of all pixels under each encoding category, performing following steps of calculating an expected offset value:
identifying (411) all integer offset values within the offset value interval;
for each integer offset value, counting (412) an occurrence number in the offset value intervals of all pixels under each encoding category, and calculating an occurrence frequency according to the occurrence number; and
calculating (413) an expected offset value corresponding to each encoding category according to the occurrence frequency of each integer offset value under each encoding category.

10. The method according to any one of claims 1 to 9, further comprising:
determining a compensated pixel value obtained by compensating the corresponding reconstructed pixel value for each pixel according to the expected offset value corresponding to the encoding category to which the pixel belongs; and
determining a pixel block formed by pixels each having the compensated pixel value as an expected reconstructed pixel block.

11. An electronic device, comprising:
at least one processor; and
a memory communicatively connected to the at least one processor;
wherein the memory stores instructions executable by the at least one processor, and the instructions, when executed by the at least one processor, cause the at least one processor to perform the adaptive compensation method during video image encoding according to any one of claims 1 to 10.

12. A non-transitory computer-readable storage medium storing computer instructions, wherein the computer instructions are configured to cause a computer to perform the adaptive compensation method during video image encoding according to any one of claims 1 to 10.

13. A computer program product comprising a computer program, wherein the computer program, when executed by a processor, implements the steps of the adaptive compensation method during video image encoding according to any one of claims 1 to 10.
